# EUROPEAN PATENT APPLICATION

(11) **EP 2 547 029 A1**
(43) Date of publication of application: **16.01.2013**
(21) Application number: 10847442.0
(22) Date of filing: 11.03.2010
(51) Int. Cl.: H04L 1/16

(54) **COMMUNICATION DEVICE, COMMUNICATION CONTROL METHOD, WIRELESS COMMUNICATION SYSTEM, AND COMMUNICATION CONTROL PROGRAM**

(71) Applicant: Fujitsu Limited, Kawasaki-shi, Kanagawa 211-8588 (JP)
(72) Inventor: KAWASAKI, Yoshihiro, Kawasaki-shi Kanagawa 211-8588 (JP); TANAKA, Yoshinori, Kawasaki-shi Kanagawa 211-8588 (JP)
(74) Representative: Ward, James Norman
(86) International application number: PCT/JP2010/054146
(87) International publication number: WO 2011/111212

(57) **Abstract**

It is an object to enhance an efficiency of using a wireless resource. In order to achieve the object, a receiving unit (2) receives a plurality of pieces of data transmitted per sub-frame as an interval which is one of divided frames. Then, a signal generating unit (3) generates notification signals associating specific information for respectively specifying the plurality of pieces of data with confirmation information indicating whether the receiving unit (2) has normally received the plurality of pieces of data. Then, a transmitting unit (4) transmits notification signals generated by the signal generating unit (3) in the same sub-frame.

## Description

### [Technical Field]

The present invention relates to a communication device, a communication control method, a wireless communication system, and a communication control program.

### [Background Art]

Conventionally, ACK (Acknowledgement) and NACK (Negative Acknowledgement) are used as signals for notifying whether data has been successfully transferred. ACK is a signal which is transmitted from a transmission destination to a transmission source when data has been successfully transferred, and NACK is a signal which is transmitted from a transmission destination to a transmission source when data has failed to be transferred.

At present, for 3GPP (3rd Generation Partnership Project), there is considered LTE-A (Long Term Evolution Advanced) as an extended system in which a relay station and the like are introduced into LTE (Long Term Evolution) capable of rapid data communication. In a communication system including base stations, relay stations and mobile stations, ACK or NACK is transmitted from a transmission destination to a transmission source whenever data is transferred between stations. For example, a relay station uses ACK or NACK to notify, to a base station, whether data has been successfully transferred from the base station. Whether data has been successfully transferred is checked by cyclic code check based on a cyclic code check code string added to the data.

### [Citation List]

### [Patent Citation]

Patent Document 1: Japanese Laid-open Patent
Publication No. 2007-143137
Patent Document 2: Japanese Laid-open Patent Publication No. 2008-017341
Patent Document 3: Japanese Laid-open Patent Publication No. 2009-118489

### [Summary of Invention]

### [Technical Problem]

However, the above conventional technique has a problem that an efficiency of using a wireless resource is low. Specifically, in LTE, ACK or NACK from a transmission destination to a transmission source is transmitted in a sub-frame of the fixed number after the sub-frame in which data has been transmitted. Thus, in LTE, one ACK or NACK is transmitted in a sub-frame, and consequently an efficiency of using a wireless resource is low.

Further, since an antenna for communicating with a base station is close to an antenna for communicating with a mobile station in a relay station, a signal transmitted by the relay station interferes with a signal transmitted from other station to the relay station. For example, a signal transmitted from the relay station to the base station interferes with a signal transmitted from the mobile station to the relay station. Thus, the relay station does not normally complete reception of the signal transmitted from the mobile station, and thus the mobile station retransmits the signal. Consequently, an efficiency of using a wireless resource is low.

The present technique intends to provide a communication device, a communication control method, a wireless communication system and a communication control program capable of enhancing an efficiency of using a wireless resource in consideration of the problems of the conventional technique.

### [Solution to Problem]

In order to solve the above problems and to achieve the objects, in the disclosed device, a receiving unit receives a plurality of pieces of data transmitted per sub-frame as an interval which is one of divided frames. Then, a signal generating unit generates notification signals which associate specific information for specifying a plurality of pieces of data with confirmation information indicating whether the receiving unit has normally received the plurality of pieces of data. Then, a transmitting unit transmits the notification signals generated by the signal generating unit in the same sub-frame.

### [Advantageous Effects of Invention]

The disclosed device enables an efficiency of using a wireless resource to be enhanced.

### [Brief Description of Drawings]

FIG. 1 is a diagram illustrating a structure of a communication device according to a first embodiment.
FIG. 2 is a diagram illustrating an exemplary communication system including a relay station and a base station according to a second embodiment.
FIG. 3 is a diagram illustrating a frame.
FIG. 4 is a diagram illustrating downlink backhaul.
FIG. 5 is a diagram illustrating a structure of the relay station according to a second embodiment.
FIG. 6 is a diagram illustrating an ACK/NACK signal transmission timing determinating unit according to the second embodiment.
FIG. 7 is a diagram illustrating an ACK/NACK signal pattern determinating unit.
FIG. 8 is a diagram illustrating an ACK/NACK signal generating unit in the relay station according to the second embodiment.
FIG. 9 is a diagram illustrating a structure of the base station according to the second embodiment.
FIG. 10 is a diagram illustrating an ACK/NACK signal generating unit in the base station according to the second embodiment.
FIG. 11 is a diagram illustrating processing procedures by the relay station according to the second embodiment.
FIG. 12 is a diagram illustrating interferences in the relay station.
FIG. 13 is a diagram illustrating a structure of a relay station according to a third embodiment.
FIG. 14 is a diagram illustrating an ACK/NACK signal generating unit in the relay station according to the third embodiment.
FIG. 15 is a diagram illustrating a structure of a base station according to the third embodiment.
FIG. 16 is a diagram illustrating processing procedures by the relay station according to the third embodiment.
FIG. 17 is a diagram illustrating a modification of an embodiment.
FIG. 18 is a diagram illustrating a computer executing a communication control program according to a fourth embodiment.

### [Embodiment for Carrying Out the Invention]

Embodiments of a communication device, a communication control method, a wireless communication system and a communication control program disclosed in the present application will be described below in detail with reference to the accompanying drawings. The communication device, the communication control method, the wireless communication system and the communication control program disclosed in the present application are not limited to the following embodiments.

### [First embodiment]

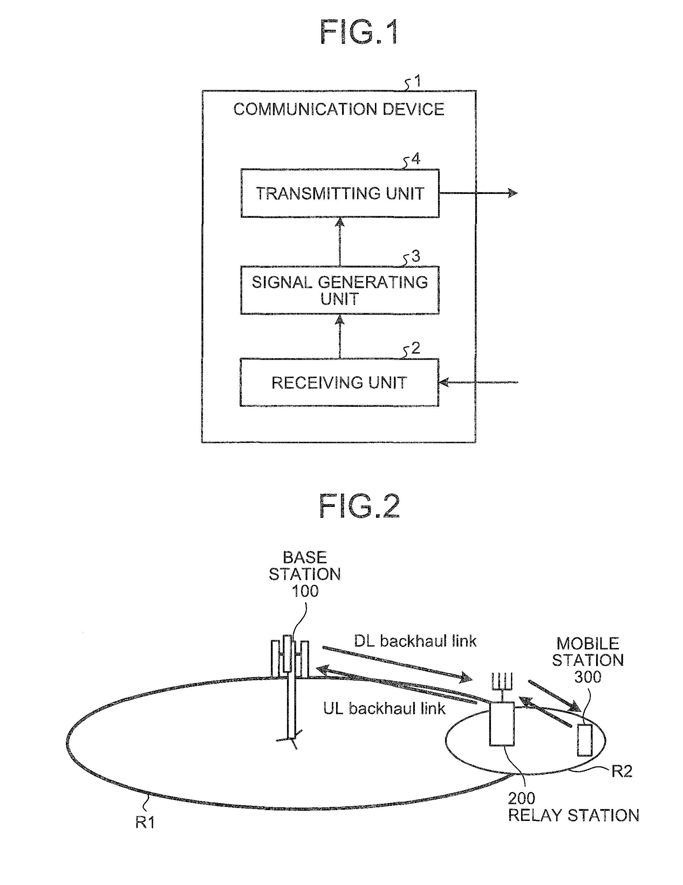

At first, a structure of a communication device according to the present embodiment will be described. FIG. 1 is a diagram illustrating the structure of the communication device according to the first embodiment. As illustrated in FIG. 1, a communication device 1 includes a receiving unit 2, a signal generating unit 3 and a transmitting unit 4, and transmits a confirmation signal indicating whether data has been normally received to a transmission source.

The receiving unit 2 receives a plurality of pieces of data transmitted per sub-frame as an interval which is one of divided frames. The signal generating unit 3 generates notification signals associating specific information for specifying a plurality of pieces of data with confirmation information indicating whether the receiving unit 2 has normally received the plurality of pieces of data respectively. The transmitting unit 4 transmits the notification signals generated by the signal generating unit 3 in the same sub-frame.

As described above, the communication device 1 according to the first embodiment generates the notification signals associating the information for specifying the respective pieces of received data per data, and transmits the generated notification signals to a transmission source. That is, the communication device 1 according to the first embodiment can cause the transmission source to judge which data the notification signal is for. Thus, the communication device 1 according to the first embodiment can transmit the generated notification signals in the same sub-frame, thereby enhancing an efficiency of using a wireless resource.

### [Second embodiment]

A case in which a relay station is used as the communication device and a case in which a base station is used as the communication device will be described in a second embodiment by way of example. For the second embodiment, an exemplary communication system including a relay station and a base station will be described first, and then a relay device according to the second embodiment will be described. Thereafter, the base station according to the second embodiment will be described. FIG. 2 is a diagram illustrating an exemplary communication system including the relay station and the base station according to the second embodiment.

The communication system including the relay station and the base station according to the second embodiment is LTE-A in which a relay station is introduced into LTE, and as illustrated in FIG. 2, includes a base station 100, a relay station 200 and a mobile station 300. A region R1 illustrated in FIG. 2 indicates a region which a radio wave covered by the base station 100 reaches. A region R2 illustrated in FIG. 2 indicates a region which a radio wave covered by the relay station 200 reaches.

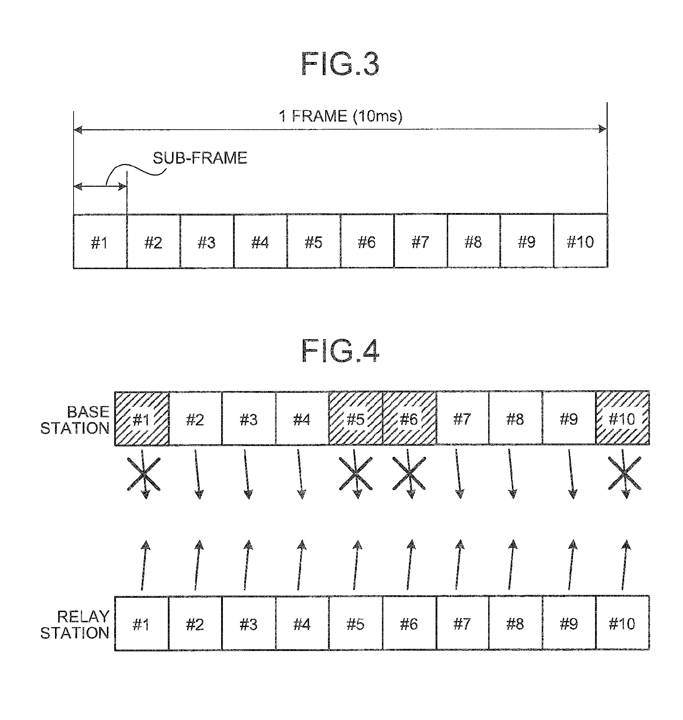

As illustrated in FIG. 2, the base station 100 exchanges data with the relay station 200 positioned within the region R1. As illustrated in FIG. 2, the relay station 200 exchanges data with the mobile station 300 positioned within the region R2. The base station 100 exchanges data with the mobile station 300 positioned within the region R1. Herein, there will be described frames when data is exchanged between the base station 100, the relay station 200 and the mobile station 300 in LTE-A. FIG. 3 is a diagram illustrating a frame.

In FIG. 3, the horizontal direction indicates a time axis. "One frame" illustrated in FIG. 3 means a transmission basic unit. "Sub-frame" illustrated in FIG. 3 is a unit when transmitting data. That is, the base station 100, the relay station 200 and the mobile station 300 exchange data in units of sub-frame. As illustrated in FIG. 3, the base station 100, the relay station 200 and the mobile station 300 exchange data in sub-frames "#1" to "#10" which are obtained by dividing a frame of 10 ms (milliseconds) into ten.

Turning to FIG. 2, for LTE-A, a sub-frame in which data is transferred is defined as DL (Down Link) backhaul in the downlink from the base station to the relay station. In LTE-A, a sub-frame in which data is transferred is defined as UL (Up Link) backhaul in the uplink from the relay station to the base station. In the following, DL backhaul may be denoted as downlink backhaul, and UL (Up Link) backhaul is denoted as uplink backhaul. The downlink backhaul will be described with reference to FIG. 4. FIG. 4 is a diagram illustrating the downlink backhaul.

FIG. 4 illustrates a frame used in the base station and a frame used in the relay station. Arrows illustrated in FIG. 4 indicate data transfer from each sub-frame. "x" illustrated in FIG. 4 means that data is not transferred in the arrow with "×." That is, the sub-frame indicated by the arrow with "x" is not set as the downlink backhaul.

The sub-frames used for transferring data from the base station to the relay station include sub-frames for transmitting a common control signal to the mobile station and sub-frames not set as the downlink backhaul. For example, as illustrated in FIG. 4, four sub-frames "#1", "#5", "#6" and "#10" are the sub-frames for transmitting a common control signal, and are not set as the downlink backhaul. Thus, in the downlink from the base station to the relay station, six sub-frames are set as the downlink backhaul.

On the other hand, in the uplink from the relay station to the base station, as illustrated in FIG. 4, all the sub-frames are set as the uplink backhaul. That is, data is transferred in the sub-frames "#1" to "#10" in the relay station.

### [Structure of relay station according to second embodiment]

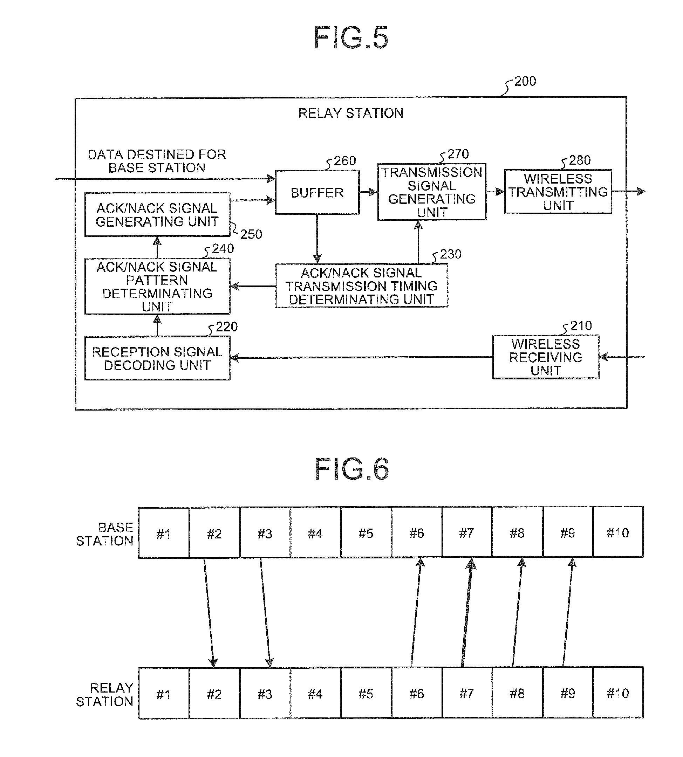

A structure of the relay station according to the second embodiment will be described below. FIG. 5 is a diagram illustrating the structure of the relay station 200 according to the second embodiment. As illustrated in FIG. 5, the relay station 200 includes a wireless receiving unit 210, a reception signal decoding unit 220, an ACK/NACK signal transmission timing determinating unit 230, an ACK/NACK signal pattern determinating unit 240, and an ACK/NACK signal generating unit 250. As illustrated in FIG. 5, the relay station 200 includes a buffer 260, a transmission signal generating unit 270 and a wireless transmitting unit 280, and transmits, to the base station 100, an ACK/NACK signal indicating whether data has been normally received from the base station 100.

The "ACK/NACK signal" means an "ACK signal or NACK signal." That is, when having normally received data from the base station 100, the relay station 200 transmits an ACK signal to the base station 100. On the other hand, when not having normally received data from the base station 100, the relay station 200 transmits a NACK signal to the base station 100.

Each part other than the buffer 260 is an integrated circuit such as an ASIC (Application Specific Integrated Circuit) or an FPGA (Field Programmable Gate Array). Alternatively, each part other than the buffer 260 is an electronic circuit such as a CPU (Central Processing Unit) or an MPU (Micro Processing Unit). The buffer 260 is a semiconductor memory device such as RAM (Random Access Memory), ROM (Read Only Memory) or flash memory, or a storage device such as hard disk or optical disk.

The wireless receiving unit 210 receives a plurality of pieces of data transmitted per sub-frame as an interval which is one of divided frames. Specifically, the wireless receiving unit 210 receives a plurality of data signals transmitted per sub-frame by the base station 100. For example, the wireless receiving unit 210 receives the data signals transmitted in the sub-frames "#2" and "#3" illustrated in FIG. 4 by the base station 100.

The reception signal decoding unit 220 decodes the data signals received by the wireless receiving unit 210. For example, the reception signal decoding unit 220 decodes the data signals received in the sub-frames "#2" and "#3" by the wireless receiving unit 210.

The ACK/NACK signal transmission timing determinating unit 230 determines a timing when an ACK/NACK signal for the data signal received by the wireless receiving unit 210 is to be transmitted. FIG. 6 is a diagram illustrating the ACK/NACK signal transmission timing determinating unit 230. FIG. 6 illustrates a frame used in the base station 100 and a frame used in the relay station 200. Arrows illustrated in FIG. 6 from the base station 100 to the relay station 200 indicate transmission of data signals. Arrows illustrated in FIG. 6 from the relay station 200 to the base station 100 indicate transmission of ACK/NACK signals.

For example, as illustrated in FIG. 6, the ACK/NACK signal transmission timing determinating unit 230 determines that the ACK/NACK signal for the data signal transmitted in the sub-frame "#2" by the base station 100 is to be transmitted in any of the sub-frames "#6" to "#9." For example, the ACK/NACK signal transmission timing determinating unit 230 determines that the ACK/NACK signal for the data signal received in the sub-frame "#2" by the wireless receiving unit 210 is to be transmitted in the sub-frame "#7." Similarly, the ACK/NACK signal transmission timing determinating unit 230 determines that the ACK/NACK signal for the data signal received in the sub-frame "#3" by the wireless receiving unit 210 is to be transmitted in the sub-frame "#7" among the sub-frames "#6" to "#9."

The ACK/NACK signal transmission timing determinating unit 230 determines a transmission timing of data destined for the base station 100, which is stored by the buffer 260 described later. For example, the ACK/NACK signal transmission timing determinating unit 230 determines that the data destined for the base station 100 is to be transmitted in the sub-frame "#5."

Turning to FIG. 5, the ACK/NACK signal pattern determinating unit 240 determines information based on a difference between the sub-frames in which a plurality of pieces of data have been transmitted and the sub-frames in which the notification signals are to be transmitted. Specifically, the ACK/NACK signal pattern determinating unit 240 determines identification information for identifying an ACK/NACK signal based on the decoding result by the reception signal decoding unit 220, the sub-frames in which data have been transmitted, and the sub-frames in which the ACK/NACK signals are to be transmitted.

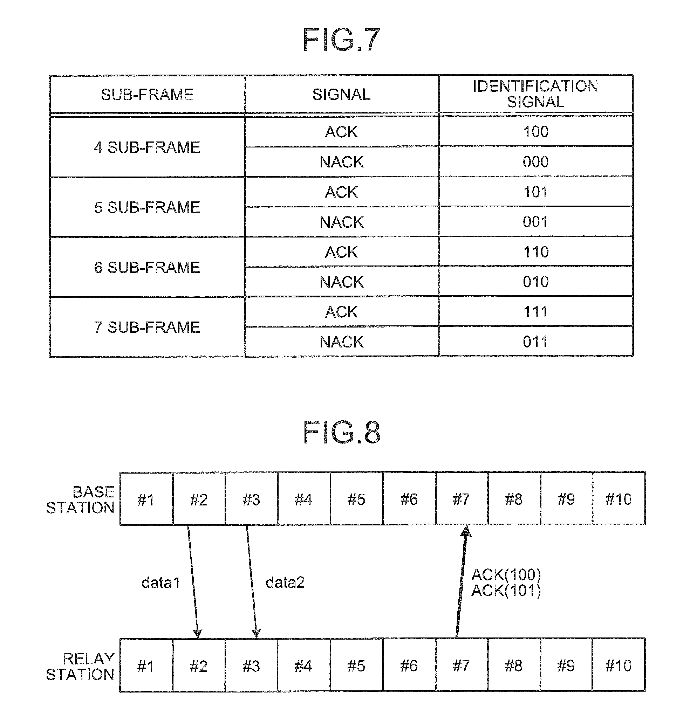

FIG. 7 is a diagram illustrating the ACK/NACK signal pattern determinating unit 240. The "sub-frame" illustrated in FIG. 7 means the number of sub-frames as a difference between the sub-frames in which the data signals have been transmitted and the sub-frames in which the ACK/NAKC signals determined by the ACK/NACK signal transmission timing determinating unit 230 are to be transmitted. The "signal" illustrated in FIG. 7 means a signal to be transmitted to the transmission source. The "identification information" illustrated in FIG. 7 means information for identifying which items of data the ACK/NACK signal is for.

As illustrated in FIG. 7, when transmitting the "ACK signal" "four sub-frames" after the sub-frame in which the data signal has been transmitted, the ACK/NACK signal pattern determinating unit 240 determines the "identification information" as "100." As illustrated in FIG. 7, when transmitting the "NACK signal" "four sub-frames" after the sub-frame in which the data signal has been transmitted, the ACK/NACK signal pattern determinating unit 240 determines the "identification information" as "000." Similarly, as illustrated in FIG. 7, the ACK/NACK signal pattern determinating unit 240 determines the "identification information" for the "ACK/NACK signal" transmitted after "five sub-frames" to "seven sub-frames" Respectively.

For example, when transmitting the ACK signal for the data signal received in the sub-frame "#2" in the sub-frame "#7", the ACK/NACK signal pattern determinating unit 240 determines the "identification information" as "101." When transmitting the ACK signal for the data signal received in the sub-frame "#3" in the sub-frame "#7", the ACK/NACK signal pattern determinating unit 240 determines the "identification information" as "100."

Turning to FIG. 5, the ACK/NACK signal generating unit 250 generates notification signals associating specific information for specifying a plurality of pieces of data with confirmation information indicating whether the plurality of pieces of data have been normally received by the wireless receiving unit 210. The ACK/NACK signal generating unit 250 generates notification signals associating information based on a difference between the sub-frames in which a plurality of pieces of data have been transmitted and the sub-frames in which the notification signals are to be transmitted, as specific information, with confirmation information. Specifically, the ACK/NACK signal generating unit 250 generates an ACK/NACK signal based on the identification information determined by the ACK/NACK signal pattern determinating unit 240.

FIG. 8 is a diagram illustrating the ACK/NACK signal generating unit 250 in the relay station 200 according to the second embodiment. FIG. 8 illustrates a frame used in the base station 100 and a frame used in the relay station 200. Arrows illustrated in FIG. 8 from the base station 100 to the relay station 200 indicate transmission of data signals. An arrow illustrated in FIG. 8 from the relay station 200 to the base station 100 indicates transmission of an ACK signal.

For example, the ACK/NACK signal generating unit 250 generates "ACK(101)" as an ACK signal for "data1" transmitted in the sub-frame "#2" as illustrated in FIG. 8. The ACK/NACK signal generating unit 250 generates "ACK(100)" as an ACK signal for "data2" transmitted in the sub-frame "#3" as illustrated in FIG. 8.

Turning to FIG. 5, the buffer 260 stores therein data received from the mobile station 300 and destined for the base station 100, and an ACK signal or NACK signal generated by the ACK/NACK signal generating unit 250. The transmission signal generating unit 270 generates an ACK/NACK signal stored in the buffer 260 or a transmission signal for transmitting a data signal for the base station 100 on the basis of the transmission timing determined by the ACK/NACK signal transmission timing determinating unit 230. For example, the transmission signal generating unit 270 generates a transmission signal for transmitting "ACK(101)" and "ACK(100)" in the sub-frame "#7."

The wireless transmitting unit 280 transmits the transmission signal generated by the transmission signal generating unit 270 to the base station 100. For example, the wireless transmitting unit 280 transmits the transmission signal for transmitting "ACK(101)" and "ACK(100)" in the sub-frame "#7" to the base station 100.

The base station 100 receives a plurality of pieces of data and the confirmation information in an associated manner on the basis of the notification signals transmitted by the relay station 200. Specifically, the base station 100 receives the confirmation information for the data transmitted from the base station 100 to the relay station 200 on the basis of the specific information associated with the transmission signals transmitted from the relay station 200. For example, the base station 100 identifies which data the ACK signal is for, on the basis of the identification information "101" and "100" of "ACK(101)" and "ACK(100)" transmitted in the sub-frame "#7" by the relay station 200.

That is, since the identification signal is "101", the base station 100 identifies that "ACK(101)" is an ACK signal for "data1" transmitted in the sub-frame "#2" five sub-frames before the sub-frame "#7." Since the identification signal is "100", the base station 100 identifies that "ACK(100)" is an ACK signal for "data2" transmitted in the sub-frame "#3" four sub-frames before the sub-frame "#7."

### [Structure of base station according to second embodiment]

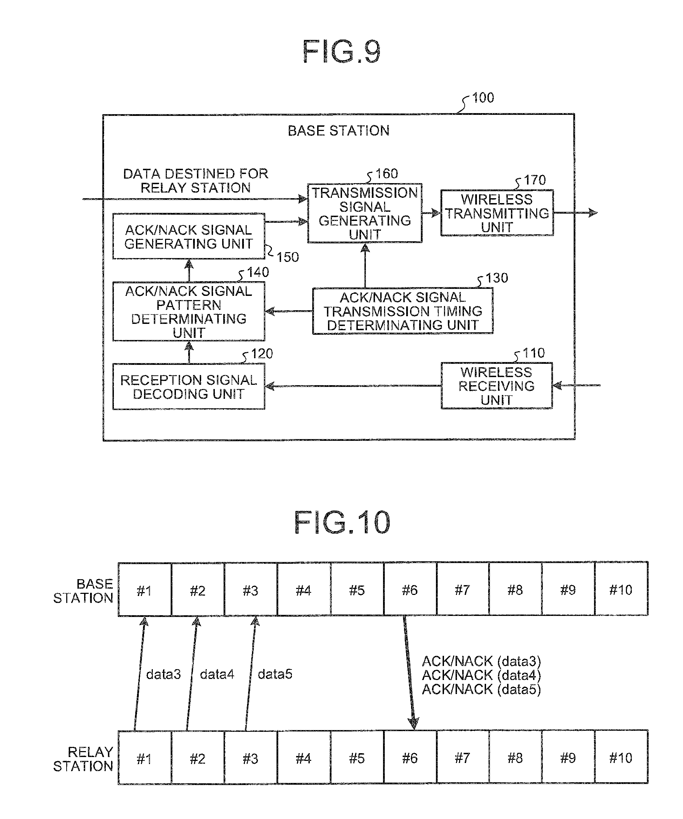

A structure of the base station according to the second embodiment will be described below. FIG. 9 is a diagram illustrating the structure of the base station 100 according to the second embodiment. As illustrated in FIG. 9, the base station 100 includes a wireless receiving unit 110, a reception signal decoding unit 120, an ACK/NACK signal transmission timing determinating unit 130, an ACK/NACK signal pattern determinating unit 140, and an ACK/NACK signal generating unit 150. As illustrated in FIG. 9, the base station 100 includes a transmission signal generating unit 160 and a wireless transmitting unit 170, and transmits, to the relay station 200, an ACK/NACK signal indicating whether data has been normally received from the relay station 200.

Each of the above parts is an integrated circuit such as an ASIC (Application Specific Integrated Circuit) or an FPGA (Field Programmable Gate Array), or an electronic circuit such as a CPU (Central Processing Unit) or an MPU (Micro Processing Unit).

The wireless receiving unit 110 receives a plurality of data signals transmitted per sub-frame by the relay station 200. The reception signal decoding unit 120 performs the same processings as those by the reception signal decoding unit 220. The ACK/NACL signal transmission timing determinating unit 130 performs the same processings as those by the ACK/NACK signal transmission timing determinating unit 230. The ACK/NACK signal pattern determinating unit 140 performs the same processings as those by the ACK/NACK signal pattern determinating unit 240.

The ACK/NACK signal generating unit 150 performs the same processings as those by the ACK/NACK signal generating unit 250. That is, the ACK/NACK signal generating unit 150 generates an ACK/NACK signal based on the identification information determined by the ACK/NACK signal pattern determinating unit 140.

FIG. 10 is a diagram illustrating the ACK/NACK signal generating unit 150 in the base station 100 according to the second embodiment. FIG. 10 illustrates a frame used in the base station 100 and a frame used in the relay station 200. Arrows illustrated in FIG. 10 from the relay station 200 to the base station 100 indicate transmission of data signals. An arrow illustrated in FIG. 10 from the base station 100 to the relay station 200 indicates transmission of an ACK/NACK signal.

For example, the ACK/NACK signal generating unit 150 generates "ACK/NACK (data3)" as an ACK/NACK signal for "data3" transmitted in the sub-frame "#1" as illustrated in FIG. 10. The ACK/NACK signal generating unit 150 generates "ACK/NACK (data4)" as an ACK signal for "data4" transmitted in the sub-frame "#2" as illustrated in FIG. 10. The ACK/NACK signal generating unit 150 generates "ACK/NACK (data5) as an ACK signal for "data5" transmitted in the sub-frame "#3" as illustrated in FIG. 10.

Turning to FIG. 9, the transmission signal generating unit 160 generates a transmission signal for transmitting a data signal destined for the relay station, and an ACK/NACK signal generated by the ACK/NACK signal generating unit 150 to the relay station 200. The wireless transmitting unit 170 transmits the transmission signal generated by the transmission signal generating unit 160 to the relay station 200. For example, the wireless transmitting unit 170 transmits, to the relay station 200, a transmission signal for transmitting "ACK/NACK (data3)", "ACK/NACK (data4)" and "ACK/NACK (data5)" in the sub-frame "#6" as illustrated in FIG. 10.

The relay station 200 identifies which data the ACK/NACK signal is for, on the basis of the identification information on "ACK/NACK (data3)", "ACK/NACK (data4)" and "ACK/NACK (data5)" transmitted by the base station 100.

Processing procedures by the base station 100 and the relay station 200 according to the second embodiment will be described below. The processing procedures by the base station 100 according to the second embodiment is the same as those by the relay station 200, and thus the processing procedures by the relay station 200 according to the second embodiment will be described below and an explanation of the processing procedures by the base station 100 according to the second embodiment will be omitted.

### [Processing procedures by relay station according to second embodiment]

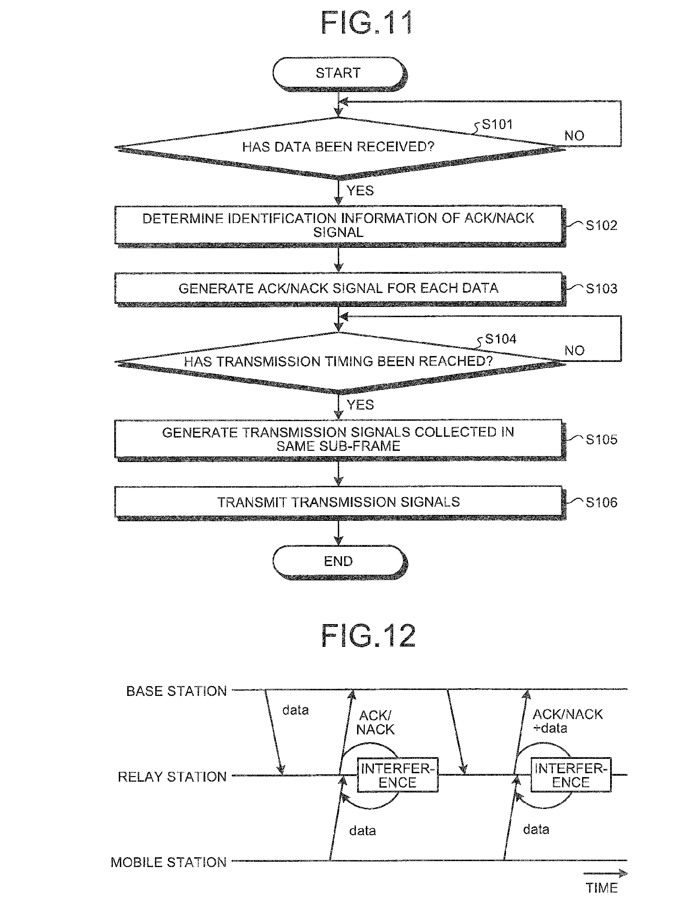

FIG. 11 is a diagram illustrating the processing procedures by the relay station according to the second embodiment. As illustrated in FIG. 11, in the relay station 200 according to the second embodiment, when receiving data from the base station 100 (YES in step S101), the ACK/NACK signal pattern determinating unit 240 determines identification information on the ACK/NACK signal for the data (step S102). Specifically, the ACK/NACK signal pattern determinating unit 240 determines the identification information based on the information on the sub-frame in which the decoded result by the reception signal decoding unit 220 and the data have been transmitted and the timing determined by the ACK/NACK signal transmission timing determinating unit 230.

Then, the ACK/NACK signal generating unit 250 generates ACK/NACK signals for the data, respectively (step S103). Specifically, the ACK/NACK signal generating unit 250 generates the ACK/NACK signals for the data, respectively, on the basis of the identification information determined by the ACK/NACK signal pattern determinating unit 240.

Thereafter, when the transmission timing is reached (YES in step S104), the transmission signal generating unit 270 generates a transmission signal by which the ACK/NACK signals for the respective items of data are collected in the same sub-frame (step S105). Then, the wireless transmitting unit 280 transmits the generated transmission signal to the base station (step S106), and completes the processing.

The relay station 200 according to the second embodiment is in a standby state until the data is received (NO in step S101). The relay station 200 according to the second embodiment is in a standby state until the transmission timing is reached (NO in step S104).

### [Effects of second embodiment]

As described above, according to the second embodiment, in the relay station 200, the wireless receiving unit 210 receives a plurality of pieces of data transmitted per sub-frame as an interval which is one of divided frames. Then, the ACK/NACK signal generating unit 250 generates notification signals associating specific information for specifying a plurality of pieces of data with confirmation information indicating whether the plurality of pieces of data have been normally received by the wireless receiving unit 210. Then, the wireless transmitting unit 280 transmits the notification signals generated by the ACK/NACK signal generating unit 250 in the same sub-frame. Thus, the relay station 200 according to the second embodiment can transmit a plurality of generated ACK/NACK signals in the same sub-frame, thereby enhancing an efficiency of using a wireless resource.

According to the second embodiment, in the relay station 200, the ACK/NACK signal generating unit 250 generates notification signals associating information based on a difference between the sub-frames in which a plurality of pieces of data have been transmitted and the sub-frames in which the notification signals are to be transmitted, as specific information, with confirmation information. Therefore, the relay station 200 according to the second embodiment uses an existing communication system thereby to enable an efficiency of using a wireless resource to be easily enhanced.

For example, in the relay station 200, the ACK/NACK signals for a plurality of pieces of data are collectively transmitted in the same sub-frame so that an occurrence frequency of interferences due to the signals transmitted from the relay station to the base station can be reduced. FIG. 12 is a diagram illustrating interferences in the relay station 200. FIG. 12 illustrates data signals and ACK/NACK signals exchanged between the base station 100, the relay station 200 and the mobile station 300.

As illustrated in FIG. 12, in the relay station 200, the ACK/NACK signal for the data signal from the base station 100 interferes with the data signal from the mobile station 300. Similarly, as illustrated in FIG. 12, in the relay station 200, the ACK/NACK signal for the data signal from the base station 100 and the data signal for the base station 100 interfere with the data signal from the mobile station 300.

However, in the relay station 200 according to the second embodiment, the ACK/NACK signals for a plurality of pieces of data can be collectively transmitted, thereby reducing two interferences illustrated in FIG. 12 to one, for example.

According to the second embodiment, in the base station 100, the wireless receiving unit 110 receives a plurality of pieces of data transmitted per sub-frame as an interval which is one of divided frames. Then, the ACK/NACK signal generating unit 150 generates notification signals associating specific information for specifying a plurality of pieces of data, respectively, with confirmation information indicating whether the plurality of pieces of data have been normally received by the wireless receiving unit 110. Then, the wireless transmitting unit 170 transmits the notification signals generated by the ACK/NACK signal generating unit 150 in the same sub-frame. Thus, the base station 100 according to the second embodiment can transmit a plurality of generated ACK/NACK signals in the same sub-frame, thereby enhancing an efficiency of using a wireless resource.

According to the second embodiment, in the base station 100, the ACK/NACK signal generating unit 150 generates notification signals associating information based on a difference between the sub-frames in which a plurality of pieces of data have been transmitted and the sub-frames in which the notification signals are to be transmitted, as specific information, with confirmation information. Thus, the base station 100 according to the second embodiment uses an existing communication system, thereby enabling an efficiency of using a wireless resource to be easily enhanced.

For example, the base station 100 stands by during the sub-frames not set as downlink backhaul, and can collectively transmit the ACK/NACK signals in the sub-frame set as downlink backhaul.

### [Third embodiment]

The case in which the sub-frame in which the data signal is transmitted is used as the information for specifying the transmitted data signal has been described in the second embodiment. In a third embodiment, there will be described a case in which a HARQ (Hybrid Automatic reQuest) process number is used as information for specifying a transmitted data signal.

### [Structure of relay station according to third embodiment]

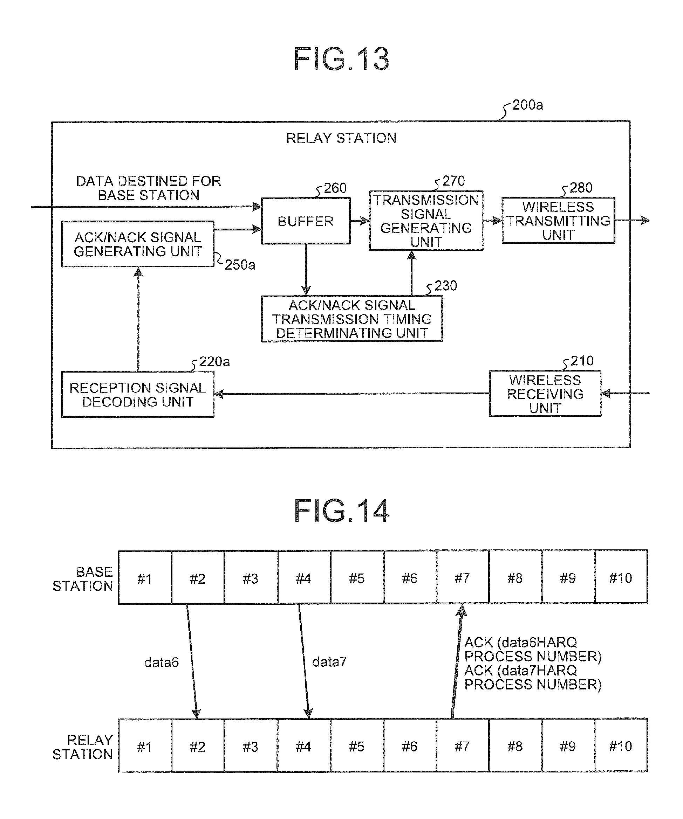

A structure of a relay station according to the third embodiment will be described first. FIG. 13 is a diagram illustrating the structure of a relay station 200a according to the third embodiment. The relay station 200a according to the third embodiment is different from the relay station 200 according to the second embodiment, as illustrated in FIG. 13, in that processing contents of a reception signal decoding unit 220a and an ACK/NACK signal generating unit 250a are different from those in the second embodiment. The difference will be mainly described below.

The reception signal decoding unit 220a decodes a plurality of data signals received by the wireless receiving unit 210, and acquires HARQ process numbers contained in control signals added to the data signals, respectively. The HARQ process number means a specific logical channel assigned to the data signal when HARQ is used.

The ACK/NACK signal generating unit 250a generates a notification signal associating the HARQ process number as specific information with confirmation information. Specifically, the ACK/NACK signal generating unit 250a generates ACK/NACK signals added with the HARQ process numbers for the data signals acquired by the reception signal decoding unit 220a, for the data signals, respectively.

FIG. 14 is a diagram illustrating the ACK/NACK signal generating unit 250a in the relay station 200a according to the third embodiment. FIG. 14 illustrates a frame used in a base station 100a and a frame used in the relay station 200a. Arrows illustrated in FIG. 14 from the base station 100a to the relay station 200a indicate transmission of data signals. An arrow illustrated in FIG. 14 from the relay station 200a to the base station 100a indicates transmission of an ACK signal.

For example, the ACK/NACK signal generating unit 250a generates "ACK (data6 HARQ process number)" as an ACK signal for "data6" transmitted in the sub-frame "#2" as illustrated in FIG. 14. The ACK/NACK signal generating unit 250a generates "ACK (data7 HARQ process number)" as an ACK signal for "data7" transmitted in the sub-frame "#4" as illustrated in FIG. 14. "ACK (data6 HARQ process number)" indicates an ACK signal added with the data6 HARQ process number. "ACK (data7 HARQ process number)" indicates an ACK signal added with the data7 HARQ process number.

### [Structure of base station according to third embodiment]

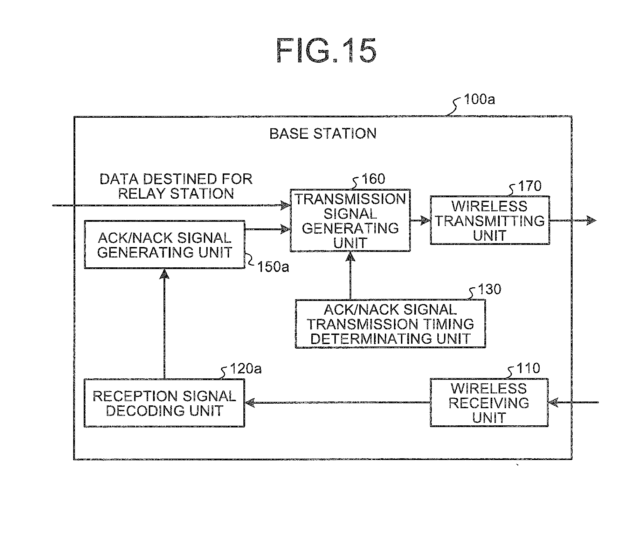

A structure of the base station according to the third embodiment will be described below. FIG. 15 is a diagram illustrating the structure of the base station 100a according to the third embodiment. The base station 100a according to the third embodiment is different from the base station 100 according to the second embodiment, as illustrated in FIG. 15, in that processing contents of a reception signal decoding unit 120a and an ACK/NACK signal generating unit 150a are different from those in the second embodiment. The difference will be mainly described below.

The reception signal decoding unit 120a performs the same processings as those by the reception signal decoding unit 220a. The ACK/NACK signal generating unit 150a performs the same processing as those by the ACK/NACK signal generating unit 250a.

Then, the base station 100a and the relay station 200a according to the third embodiment identify which data an ACK/NACK signal is for, on the basis of a HARQ process number associated with a transmission signal.

Processing procedures by the base station 100a and the relay station 200a according to the third embodiment will be described below. The processing procedures by the base station 100a according to the third embodiment is the same as those by the relay station 200a, and thus the processing procedures by the relay station 200a according to the third embodiment will be described below and an explanation of the processing procedures by the base station 100a according to the third embodiment will be omitted.

### [Processing procedures by relay station according to third embodiment]

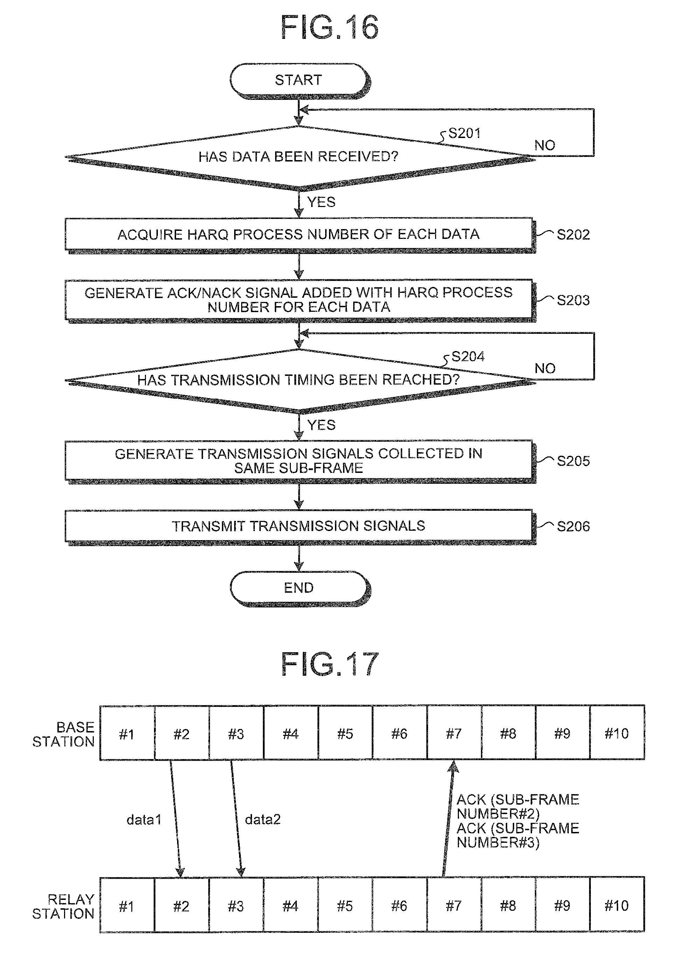

FIG. 16 is a diagram illustrating the processing procedures by the relay station according to the third embodiment. As illustrated in FIG. 16, in the relay station 200a according to the third embodiment, when receiving data from the base station 100a (YES in step S201), the reception signal decoding unit 220a acquires respective HARQ process numbers of the data signals (step S202).

Then, the ACK/NACK signal generating unit 250a generates the ACK/NACK signals added with the HARQ process numbers for the data, respectively (step S203). Herein, when the transmission timing is reached (YES in step S204), the transmission signal generating unit 270 generates a transmission signal by which the ACK/NACK signals for the respective pieces of data are collected in the same sub-frame (step S205). Thereafter, the wireless transmitting unit 280 transmits the generated transmission signal to the base station 100a (step S206), and completes the processing.

The relay station 200a according to the third embodiment is in a standby state until the data is received (NO in step S201). The relay station 200a according to the third embodiment is in a standby state until the transmission timing is reached (NO in step S204).

### [Effects of third embodiment]

According to the third embodiment, in the relay station 200a, the ACK/NACK signal generating unit 250a generates a notification signal associating the HARQ process number as the specific information with the confirmation information. Thus, the relay station 200a according to the third embodiment can enhance an efficiency of using a wireless resource without performing the processings by the ACK/NACK signal pattern determinating unit 240. That is, the relay station 200a can reduce the area in which the processing device is mounted, and can be downsized.

According to the third embodiment, in the base station 100a, the ACK/NACK signal generating unit 150a generates a notification signal associating the HARQ process number as the specific information with the confirmation information. Thus, the base station 100a according to the third embodiment can enhance an efficiency of using a wireless resource without performing the processings by the ACK/NACK signal pattern determinating unit 140. That is, the base station 100a can reduce the area in which the processing device is mounted, and can be downsized.

### [Fourth embodiment]

The first to third embodiments have been described above, but various different forms other than the first to third embodiments may be implemented. Various forms (1) to (4) will be described below.

### (1) Modified embodiment

There has been described in the second embodiment the case in which in the base station 100 and the relay station 200, the ACK/NACK signal generating units use a difference between the sub-frames in which data are transmitted and the sub-frames in which ACK/NACK signals are transmitted to generate an ACK/NACK signal. However, the present embodiment is not limited thereto, and the ACK/NACK signal generating unit may generate notification signals associating information for specifying a position in a frame of a sub-frame in which a plurality of pieces of data are transmitted as specific information with confirmation information. For example, the number of the sub-frame in which the data signal is transmitted may be used.

FIG. 17 is a diagram illustrating a modified embodiment. FIG. 17 illustrates a frame used in the base station and a frame used in the relay station. Arrows illustrated in FIG. 17 from the base station 100 to the relay station 200 indicate transmission of data signals. An arrow illustrated in FIG. 17 from the relay station 200 to the base station 100 indicates transmission of an ACK signal.

For example, the ACK/NACK signal generating unit 250 generates "TACK (sub-frame number #2)" as an ACK signal for "data" transmitted in the sub-frame "#2" as illustrated in FIG. 17. The ACK/NACK signal generating unit 250 generates "TACK (sub-frame number #3)" as an ACK signal for "data2" transmitted in the sub-frame "#3" as illustrated in FIG. 17. "ACK (sub-frame #2)" indicates an ACK signal added with the sub-frame number #2. "ACK (sub-frame number #3)" indicates an ACK signal added with the sub-frame number #3. The base station 100 identifies which data the ACK signal is for, on the basis of the sub-frame number.

The above modified embodiment can be adapted also in the base station 100, and in the base station 100, the ACK/NACK signal generating unit 150 generates an ACK/NACK signal added with the number of the sub-frame in which the data signal is transmitted.

According to the above modified embodiment, the ACK/NACK signal generating unit 250 and the ACK/NACK signal generating unit 150 generate an ACK/NACK signal added with the number of the sub-frame in which a plurality of pieces of data are transmitted. Thus, in a communication device according to the present embodiment, a processing of calculating a difference between the sub-frames in which the data signals are transmitted and the sub-frames in which the ACK/NACK signals are transmitted can be omitted, and a processing load for the ACK/NACK signal generation can be reduced.

### (2) Communication device

The case in which a base station and a relay station are used as the communication devices has been described in the above second and third embodiments and the variant, but the present embodiment is not limited thereto, and a mobile station may be used, for example.

### (3) System configuration and others

Each constituent in each illustrated device is functionally conceptual, and does not necessarily need to be physically the same as an illustrated constituent. That is, a specific form of distribution and integration in each device is not limited to illustrated one, and all or part of it may be functionally or physically distributed or integrated in any unit according to various loads or use situation. For example, the ACK/NACK signal pattern determinating unit 240 and the ACK/NACK signal generating unit 250 illustrated in FIG. 5 may be integrated as one signal generating unit. On the other hand, the reception signal decoding unit 220a illustrated in FIG. 13 may be distributed into a decoding unit which decodes a reception signal and an acquisition unit which acquires a HARQ process number.

### (4) Communication control program

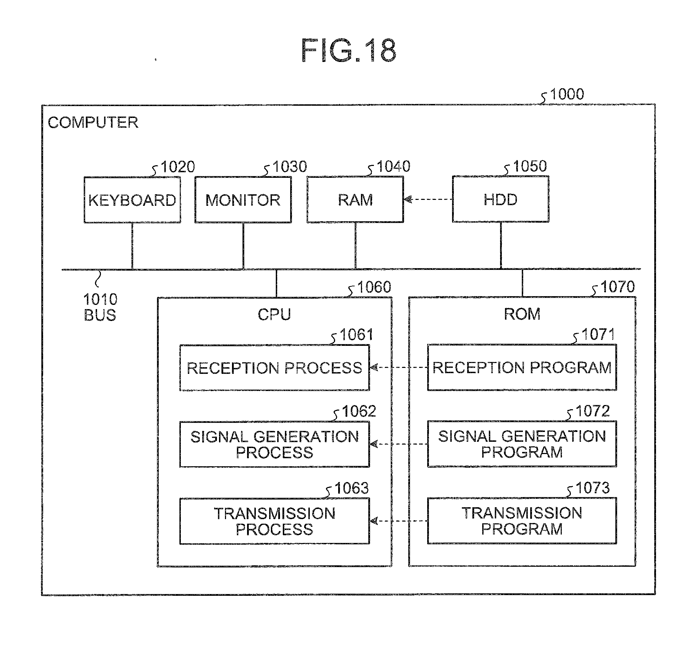

The case in which various processings are implemented by hardware logic has been described in the above first embodiment, but the present embodiment is not limited thereto, and a previously-prepared program may be executed in a computer. An exemplary computer which executes a communication control program having the same functions as the communication device 1 according to the first embodiment will be described below with reference to FIG. 18. FIG. 18 is a diagram illustrating a computer which executes a communication control program according to a fourth embodiment.

As illustrated in FIG. 18, a computer 1000 as an information processing device includes a keyboard 1020, a monitor 1030, a RAM 1040, an HDD 1050, a CPU 1060 and a ROM 1070. Then, the keyboard 1020, the monitor 1030, the RAM 1040, the HDD 1050, the CPU 1060 and the ROM 1070 are connected via a bus 1010 and the like.

The ROM 1070 previously stores a communication control program which performs the same functions as the communication device 1 according to the first embodiment, that is, a reception program 1071, a signal generation program 1072 and a transmission program 1073 as illustrated in FIG. 18. The programs 1071 to 1073 may be integrated or distributed as needed similarly to the constituents in the communication device 1 illustrated in FIG. 1.

Then, the CPU 1060 reads and executes the programs 1071 to 1073 from the ROM 1070 thereby to function as each process as illustrated in FIG. 18. That is, a reception process 1061, a signal generation process 1062 and a transmission process 1063 function. The respective processes 1061 to 1063 correspond to the receiving unit 2, the signal generating unit 3 and the transmitting unit 4 as illustrated in FIG. 1, respectively.

The programs 1071 to 1073 do not necessarily need to be originally stored in the ROM 1070, may be stored in other storage medium or storage device, and may be read and executed therefrom by the computer 1000. Other storage medium or storage device is a portable physical medium" such as a flexible dick (FD), a CD-ROM, an MO disk, a DVD disk, a magnetooptical disk and an IC card, which are to be inserted into the computer 1000. Other storage medium or storage device is a "fixed physical medium" such as an HDD provided inside or outside the computer 1000. Other storage medium or storage device is "other computer (or server)" connected to the computer 1000 via public line, Internet, LAN, or WAN.

### [Explanation of Reference]

1 COMMUNICATION DEVICE
2 RECEIVING UNIT
3 SIGNAL GENERATING UNIT
4 TRANSMITTING UNIT
100, 100a BASE STATION
200, 200a RELAY STATION
110, 210 WIRELESS RECEIVING UNIT
120, 220 RECEPTION SIGNAL DECODING UNIT
130, 230 ACK/NACK SIGNAL TRANSMISSION TIMING DETERMINATING UNIT
140, 240 ACK/NACK SIGNAL PATTERN DETERMINATING UNIT
150, 250 ACK/NACK SIGNAL GENERATING UNIT
160, 270 TRANSMISSION SIGNAL GENERATING UNIT
170, 280 WIRELESS TRANSMITTING UNIT
300 MOBILE STATION

## Claims

1. A communication device comprising:
a receiving unit that receives a plurality of pieces of data transmitted using sub-frames, which are intervals obtained by dividing a frame;
a signal generating unit that generates notification signals associating specific information for respectively specifying the plurality of pieces of data with confirmation information indicating whether the receiving unit has normally received the plurality of pieces of data; and
a transmitting unit that transmits the notification signals in a same sub-frame.

2. The communication device according to claim 1, wherein
the signal generating unit generates notification signals associating information based on a difference between sub-frames in which the plurality of pieces of data are transmitted and sub-frames in which the notification signals are transmitted as the specific information with the confirmation information.

3. The communication device according to claim 1, wherein
the signal generating unit generates notification signals associating information for specifying a position in the frame of a sub-frame in which the plurality of pieces of data are transmitted as the specific information with the confirmation information.

4. The communication device according to claim 1, wherein
the signal generating unit generates a notification signal associating a HARQ process number as the specific information with the confirmation information.

5. A communication control method in a communication device, the communication control method comprising:
receiving a plurality of pieces of data transmitted using sub-frames, which are intervals obtained by dividing a frame;
generating notification signals associating specific information for respectively specifying the plurality of pieces of data with confirmation information indicating whether the plurality of pieces of data have been normally received; and
transmitting the notification signals in a same sub-frame.

6. A wireless communication system including a plurality of communication devices,
wherein the plurality of communication devices each comprise:
a receiving unit that receives a plurality of pieces of data transmitted using sub-frames, which are intervals obtained by dividing a frame;
a signal generating unit that generates notification signals associating specific information for respectively specifying the plurality of pieces of data with confirmation information indicating whether the receiving unit has normally received the plurality of pieces of data; and
a transmitting unit that transmits the notification signals in a same sub-frame,
one of the plurality of communication devices transmits the notification signals, and
other communication device among the plurality of communication devices receives the plurality of pieces of data and the confirmation information in an associated manner on the basis of the transmitted notification signals.

7. A communication control program for causing a computer to execute:
receiving a plurality of pieces of data transmitted using sub-frames, which are intervals obtained by dividing a frame;
generating notification signals associating specific information for respectively specifying the plurality of pieces of data with confirmation information indicating whether the plurality of pieces of data have been normally received in the receiving; and
transmitting the notification signals in a same sub-frame.
